# EUROPEAN PATENT SPECIFICATION

(11) **EP 2 773 028 B1**
(45) Date of publication and mention of the grant of the patent: **18.01.2017**
(21) Application number: 13157406.3
(22) Date of filing: 01.03.2013
(51) Int. Cl.: H02K 7/06, H02K 3/46

(54) **SPINDLE DRIVE**
SPINDELANTRIEB
ENTRAINEMENT A BROCHE

(43) Date of publication of application: 03.09.2014
(73) Proprietor: Tricore Corporation, 503 Changhua County (TW)
(72) Inventor: Hsieh, Ping-Ju, Changhua County 503 (TW)
(74) Representative: Becker Kurig Straus

(56) References cited:
- US-A1- 2012 153 756
- US-B1- 6 455 973
- US-B2- 7 151 333

## Description

### BACKGROUND OF THE INVENTION

### 1. Field of the Invention

The present invention relates to motor technology and more particularly, to a linear motor, which shortens the assembly time and provides a high level of precision.

### 2. Description of the Related Art

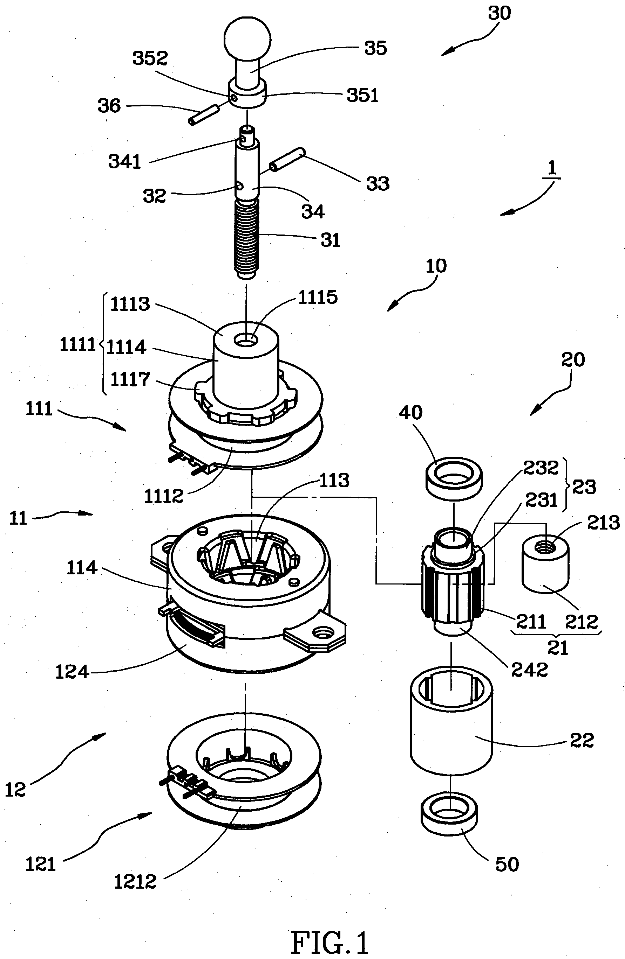

Normally, a linear motor has the advantages of low cost and high controllability. Therefore, linear motors are intensively used in actuators. Some linear motors use permanent magnets. These linear motors are less expensive. US 7,151,333 discloses a similar linear motor, entitled "Actuator provided with grounding terminal", which, as shown in FIG. 1 of '333 patent, comprises a stator assembly (2), a rotor unit (10), an output shaft (13) and a housing (21). The rotor module (10) is rotatably mounted in the stator module (2). The output shaft (13) is linearly movable subject to rotation of the rotor module (10). The housing (21) is connected to the stator assembly (2) by a front plate (20).

In detail, the front plate (20) is welded to the stator assembly (2), and then the housing (21) positioned on the front plate (20), and then the front plate (20) is curved to secure the housing (21) in position. However, securing the housing (21) to the stator module (2) in this way complicates the manufacturing process of the linear motor. Further, when welding or curving the front plate (20), it is difficult to keep the housing (21) in position, affecting the accuracy of the linear motor.

For this reason, any person skilled in the art should take into account all possible improvements on linear motor to overcome the foregoing problems.

Further linear actuators are disclosed e.g. in US 6,455,973. Said patent document discloses a magnetic device having a stator assembly having a magnetic flux return path comprising at least a pair of pole plates located a fixed distance apart from each other and at least one flux return strip pressed between each pair of spaced apart pole plates, and a rotor assembly having permanent magnetic material and being disposed for rotation relative to the stator assembly. In Fig. 1 of said disclosure an actuator is shown having a stator comprising an upper and a bottom bobbin, which are integral in one piece with the upper holder member. Further, a bottom holder member is connected to the bottom bobbin. However, the bottom bobbin is abutted against the upper bobbin, meaning that only the upper bobbin is integral in one piece with the upper holder member. It is thus one aspect of the present invention to provide a linear motor having fewer parts.

US 2012/0153756 also discloses a respective motor, in which however the bottom holder member is integral in one piece with the bottom bobbin. The present invention therefore still solves the problem of providing a linear motor having fewer parts.

### SUMMARY OF THE INVENTION

The present invention has been accomplished under the circumstances in view. It is the main object of the present invention to provide a linear motor, which facilitates assembling and provide a high level of precision.

To achieve this and other objects of the present invention, a linear motor according to claim 1 comprises a stator module, a rotor module, and an extension rod.

The stator module comprises a first stator unit and a second stator unit. The first stator unit comprises an upper end cap and a first winding. The upper end cap comprises an upper holder member, and an upper bobbin extended from the upper holder member. The upper holder member comprises a top wall having a through hole. The first winding is wound round the upper bobbin. The second stator unit comprises a bottom end cap and a second winding. The bottom end cap comprises a bottom holder member, and a bottom bobbin connected to the bottom holder member and abutted against the upper bobbin. The second winding is wound round the bottom bobbin.

The rotor module is rotatably mounted in the stator module. The rotor module comprises a rotor body, and at least one magnet mounted around the rotor body. The rotor body comprises an inner thread. The magnet faces toward the first and second windings.

The extension rod is linearly movably inserted through the through hole of the top wall into the inside of the stator module, comprising an outer thread threaded onto the inner thread of the rotor body for moving the extension rod linearly upon rotation of the rotor module.

Further, the upper bobbin extends integrally from the upper holder member. Thus, no any other fixing means is necessary between the holder member and the bobbin. Therefore, the component assembly process is simplified, avoiding any positioning problem between the upper bobbin and the upper holder member, and ensuring a high level of precision of the linear motor.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an exploded view of a linear motor in accordance with a first embodiment of the present invention.
FIG. 2 is an elevational assembly view of the linear motor in accordance with the first embodiment of the present invention.
FIG. 3 is a sectional view of the first embodiment of the present invention, illustrating the extension rod in the lower limit position.
FIG. 4 is a sectional view of the first embodiment of the present invention, illustrating the extension rod in the upper limit position.
FIG. 5 is an exploded view of a linear motor in accordance with a second embodiment of the present invention.
FIG. 6 is a sectional view of the linear motor in accordance with the second embodiment of the present invention.

### DETAILED DESCRIPTION OF THE INVENTION

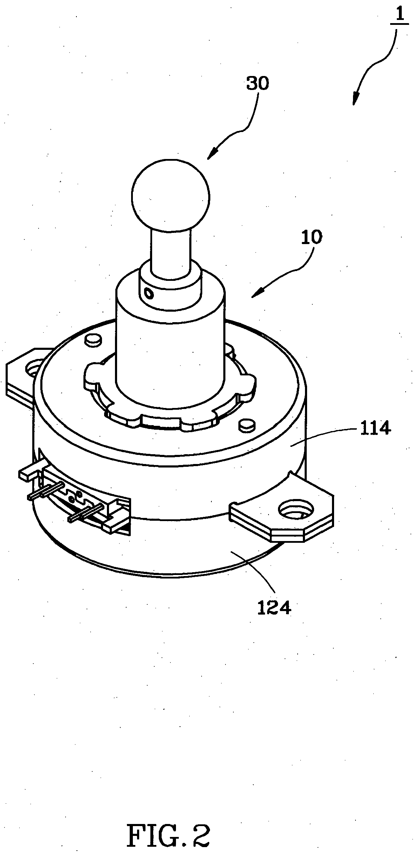

Referring to FIGS. 1 through 3, a linear motor **1** in accordance with a first embodiment of the present invention is shown. The linear motor **1** comprises a stator module **10**, a rotor module **20**, an extension rod **30**, and two bearings **40,50**.

The stator module **10** comprises a first stator unit **11**, and a second stator unit **12** mounted to the first stator unit **11**.

The first stator unit **11** comprises an upper end cap **111**, and a first winding **112**. The upper end cap **111** comprises an upper holder member **1111**, and an upper bobbin **1112** extended from the upper holder member **1111** for the winding of the first winding **112**. The upper holder member **1111** comprises a top wall **1113**, and an annular peripheral wall **1114** connected between the top wall **1113** and the upper bobbin **1112.** The top wall **1113** defines a through hole **1115** for the insertion of the extension rod **30**. The annular peripheral wall **1114** defines at least one, for example, two guide grooves **1116**. To facilitate positioning the bearing **40**, the upper holder member **1111** defines a first bearing positioning portion **1117** between the annular peripheral wall **1114** and the upper bobbin **1112**. The first bearing positioning portion **1117** defines a thrust surface **1118** and a ring surface **1119** for bearing the outer race of the bearing **40**. In order to prohibit the first winding **112** from being exposed to the outside, the first stator unit **11** further comprises an inner magnetic yoke **113** and an outer magnetic yoke **114**, and an accommodation chamber **115** defined between the inner magnetic yoke **113** and the outer magnetic yoke **114** for accommodating the upper bobbin **1112** and the first winding **112**.

The structure of the second stator unit **12** is substantially similar to the first stator unit **11**, comprising a bottom end cap **121** and a second winding **122**. The bottom end cap **121** comprises a bottom holder member **1211**, and a bottom bobbin **1212** extended from the bottom holder member **1211** and abutted against the upper bobbin **1112**. The bottom bobbin **1212** is provided for the winding of the second winding **122**. A cavity is defined between the upper holder member **111** and the bottom holder members **1211** for accommodating the rotor module **20**. Similarly, for accurately positioning the bearing **50**, the bottom holder member **1211** provides a third bearing positioning portion **1213** between the bottom holder member **1211** and the bottom bobbin **1212**. This third bearing positioning portion **1213** defines a thrust surface **1214** and a ring surface **1215** for bearing the outer race of the bearing **50**. Further, in order to prohibit the second winding **122** from being exposed to the outside, the second stator unit **12** further comprises an inner magnetic yoke **123**, an outer magnetic yoke **124**, and an accommodation chamber **125** defined between the inner magnetic yoke **123** and the outer magnetic yoke **124** for accommodating the bottom bobbin **1212** and the second winding **122**. Making the bottom bobbin and the bottom holder member integrally in one piece ensures higher precision. However, in another embodiment of the present invention, the bottom bobbin can be a separated member connected to the bottom holder member by lock means, snap fastener, or any other fixing means.

The rotor module **20** is rotatably mounted in the stator module **10**. More clearly, the rotor module **20** comprises a rotor body **21**, and an annular hollow magnet **22** mounted around the rotor body **21** within the first winding **112** and the second winding **122**. The rotor body **21** comprises a magnet holder **211** for holding the annular hollow magnet **22**, and a nut **212** mounted inside the magnet holder **211**. The nut **212** defines therein an inner thread **213**. For accurately positioning the bearings **40,50**, the rotor body **21** further comprises a second bearing positioning portion **23** and a fourth bearing positioning portion **24** corresponding to the first bearing positioning portion **1117** and third bearing positioning portion **1213** of the stator module **10**. Further, the second and fourth bearing positioning portions **23,24** each define a thrust surface **231,241** and a ring surface **232,242** for bearing the bearings **40,50**. Thus, the bearings **40,50** are respectively positioned between the first and second bearing positioning portions **1117,23** and the third and fourth bearing positioning portions **1213,24**. Alternatively, multiple magnets can be arranged around the rotor body, and the rotor body can simply have the aforesaid magnet holder that has an inner thread defined thereof. Further, the amount of the bearings can also be changed.

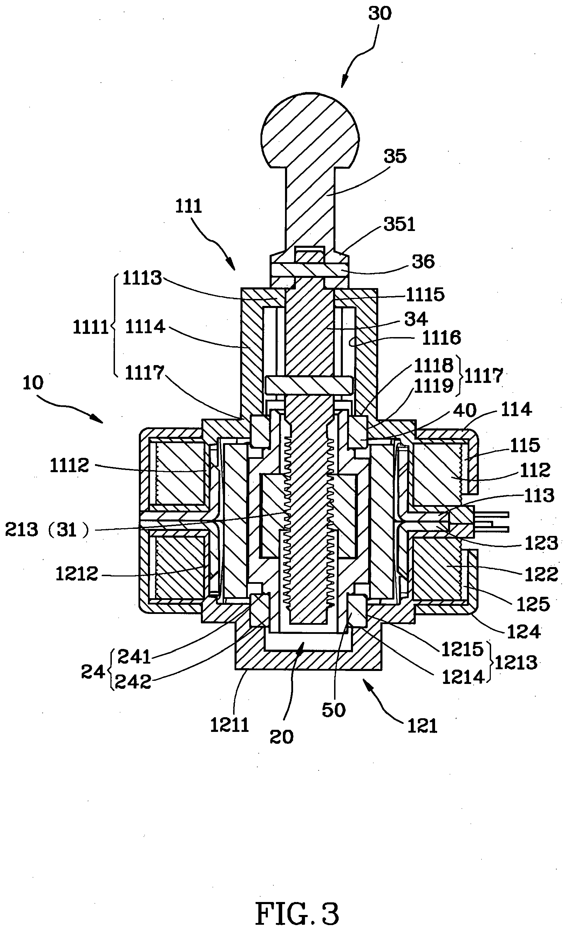

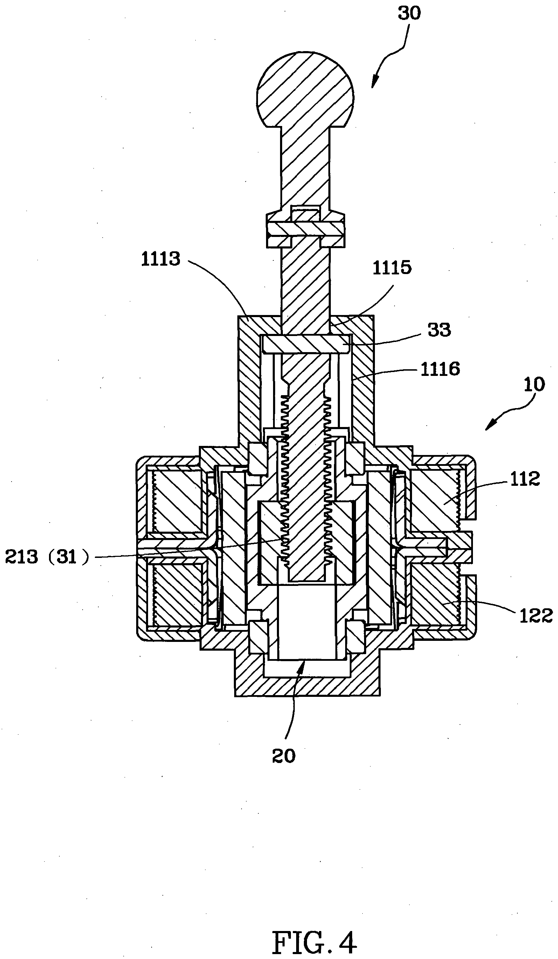

The extension rod **30** can be moved in the through hole **1115** of the top wall **1113** and inserted into the inside of the stator module **10**. Further, the extension rod **30** defines an outer thread **31** that is threaded into the inner thread **213** of the rotor body **21**. Thus, when the first and second windings **112,122** are electrically conducted, the rotor module **20** is rotated, driving the extension rod **30** to move linearly in the range shown in FIGS. 3 and 4. In this embodiment, the extension rod 30 comprises a pin hole **32** and a locating pin **33**. The locating pin **33** is mounted in the pin hole **32**, and movable in the guide grooves **1116** to prohibit the extension rod **30** from rotation during its linear motion. This arrangement to prohibit the extension rod **30** from rotation is not a limitation. Other measures can be selectively used. Further, the extension rod **30** comprises a first rod component **34** inserted into the stator module **1**, a second rod component **35** exposed outside the stator module **10**, and a connection pin **36**. The first rod component **34** defines an outer thread **31** and a first pin hole **341**. The second rod component **35** defines a first connection end **351**, and a second pin hole **352** at the connection end **351** and corresponding to the first pin hole **341**. The connection pin 36 is inserted into the first pin hole **341** and the second pin hole **351** to join the first and second rod components **34,35**. Further, the width of the connection end **351** is larger than the diameter of the through hole **1115**, preventing falling of the extension rod **30** into the inside of the stator module **10**.

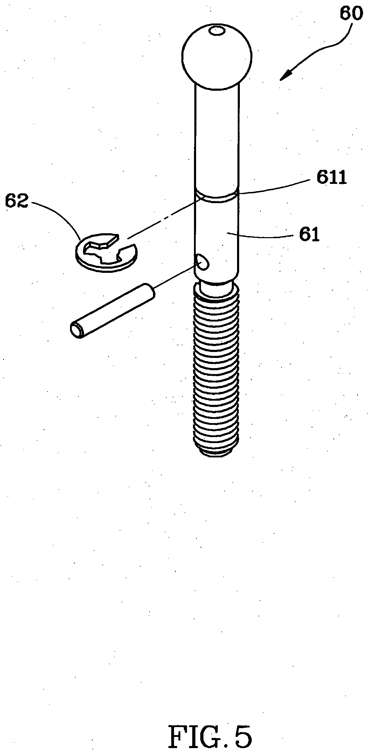

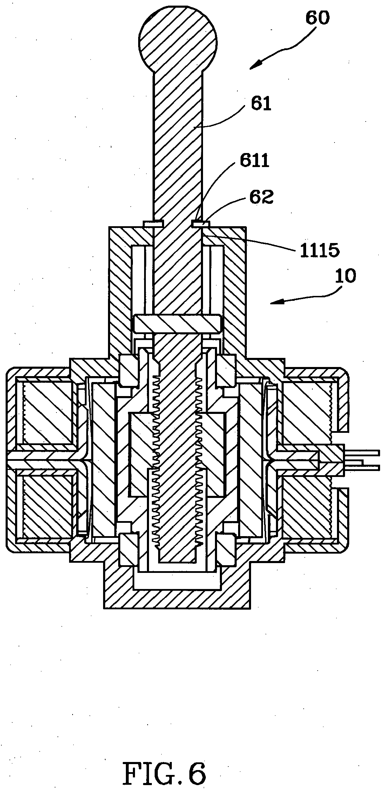

Further, in a second embodiment of the present invention shown in FIGS.5 and 6, the extension rod **60** comprises one single rod component **61** that has a locating groove **611** extending around the periphery and disposed outside the stator module **10**, and a E-shaped retaining ring **62** mounted in the locating groove **611** and stopped outside the stator module **10**. The E-shaped retaining ring **62** is larger than the diameter of the through hole **1115**. Thus, the E-shaped retaining ring **62** can prevent the extension rod **60** from falling into the inside of the stator module **10**.

As stated above, the first and second stator units of the linear motor in accordance with the present invention each comprise a holder member and a bobbin, i.e., no any other fixing means is necessary between the holder member and the bobbin. Thus, the component assembly process is simplified without cumulative tolerance, and the precision of the linear motor is greatly improved to meet the needs of industry.

Although particular embodiments of the invention have been described in detail for purposes of illustration, various modifications and enhancements may be made without departing from the scope of the invention. Accordingly, the invention is not to be limited except as by the appended claims.

## Claims

1. A linear motor (1), comprising:
a stator module (10) comprising a first stator unit (11) and a second stator unit (12) mounted to said first stator unit (11), said first stator unit (11) comprising an upper end cap (111) and a first winding (112), said upper end cap (111) comprising an upper holder member (1111) and an upper bobbin (1112), said upper holder member (2222) comprising a top wall (1113), said top wall (1113) comprising a through hole (1115), said first winding (112) being wound round said upper bobbin (1112), said second stator unit (12) comprising a bottom end cap (121) and a second winding (122), said bottom end cap (121) comprising a bottom holder member (1211) and a bottom bobbin (1212), said second winding (122) being wound round said bottom bobbin (1212),
a rotor module (20) rotatably mounted in said stator module (10), said rotor module (20) comprising a rotor body (21) and at least one magnet (22) mounted around said rotor body (21) and facing toward said first winding (112) and said second winding (122), said rotor body (21) comprising an inner thread (213), and an extension rod (30) linearly movably inserted through said through hole (1115) of said top wall (1113) into the inside of said stator module (10), said extension rod (30) comprising an outer thread (31) threaded into said inner thread (213) of said rotor body (21) for driving said extension rod (30) to move linearly during rotation of said rotor module (20),
said upper holder member (1111) and said upper bobbin (1112) are integral in one piece and said upper bobbin (1112) extends from said upper holder member (1111),
**characterised in that** said bottom bobbin (1212) being connected to said bottom holder member (1211) and abutted against said upper bobbin (1112).

2. The linear motor as claimed in claim 1, wherein said upper holder member (1111) comprises a first bearing positioning portion (1117), said rotor body (21) comprises a second bearing positioning portion (23), the linear motor (1) further comprises a bearing set (40,50) between said first bearing positioning portion (1117) and said second bearing positioning portion (23).

3. The linear motor as claimed in claim 1, wherein said bottom holder member (1211) comprises a third bearing positioning portion (1213), said rotor body (21) comprises a fourth bearing positioning portion (24), the linear motor (1) further comprises a bearing set (40,50) between said third bearing positioning portion (1213) and said fourth bearing positioning portion (24).

4. The linear motor as claimed in claim 1, wherein said upper holder member (1111) comprises an annular peripheral wall (1114) and at least one guide groove (1116) disposed in said annular peripheral wall (1114), said extension rod (30) comprises a pin hole (32) and a locating pin inserted (33) through said pin hole (32) and coupled to and movable along said guide groove (1116).

5. The linear motor as claimed in claim 1, wherein said extension rod (30) comprises a first rod component (34) inserted into said stator module (10), said first rod component (34) carrying said outer thread (31) and comprising a first pin hole (341), a second rod component (35) exposed outside said stator module (10), said second rod component (35) comprising a second pin hole (352), and a connection pin (36) inserted into said first pin hole (341) and said second pin hole (352) to join said first rod component (34) and said second rod component (35).

6. The linear motor as claimed in claim 5, wherein said second rod component (35) comprises a connection end (351) carrying said second pin hole (352), said connection end (351) having a transverse width larger than the diameter of the through hole (1115) of said top wall (1113).

7. The linear motor as claimed in claim 1, wherein said extension rod (30) comprises a locating groove (611) extending around the periphery thereof and disposed outside said stator module (10), and a retaining ring (62) mounted in said locating groove (611) and stoppable outside said stator module (10).

8. The linear motor as claimed in claim 1, wherein said first stator unit (11) further comprises outer magnetic yoke (114), an inner magnetic yoke (113), and an accommodation chamber (115) defined between the outer magnetic yoke (14) and inner magnetic yoke (113) of said first stator unit (11) for accommodating said upper bobbin (1112) and said first winding (112).

9. The linear motor as claimed in claim 1, wherein said second stator unit (12) further comprises an outer magnetic yoke (124), an inner magnetic yoke (123), and an accommodation chamber (125) defined between the outer magnetic yoke (124) and inner magnetic yoke (123) of said second stator unit (12) for accommodating said bottom bobbin (1212) and said second winding (122).

10. The linear motor as claimed in claim 1, wherein said rotor body (21) comprises a magnet holder (211) holding said magnet (22) therearound, and a nut (212) mounted in said magnet holder (211) and defining said inner thread (213) therein.

## Patentansprüche

1. Linearmotor (1) umfassend:
Ein Statormodul (10) umfassend eine erste Statoreinheit (11) sowie eine zweite Statoreinheit (12), die an der ersten Statoreinheit (11) angeordnet ist, wobei die Statoreinheit (11) eine obere Endkappe (111) und erste Windungen (112) umfasst, wobei die obere Endkappe (111) ein oberes Halteelement (1111) sowie eine obere Trommel (1112), wobei das obere Halteelement (1111) eine obere Wand (1113) umfasst, wobei die obere Wand (1113) ein Durchgangsloch (1115) umfasst, wobei die ersten Windungen (112) um die obere Trommel (1112) herum gewunden sind, wobei die zweite Statoreinheit (12) eine untere Endkappe (121) sowie zweite Windungen (122) umfasst, wobei die untere Endkappe (121) ein unteres Halteelement (1211) sowie eine untere Trommel (1212) umfasst, wobei die zweiten Windungen (122) um die untere Trommel (1212) herum gewunden sind,
ein Rotormodul (20), das drehbar in dem Statormodul (10) angeordnet vorliegt, wobei das Rotormodul (20) einen Rotorkörper (21) und wenigstens einen Magneten (22) umfasst, der um den Rotorkörper (21) herum angeordnet ist und in Richtung der ersten Windungen (112) und der zweiten Windungen (122) weist, wobei der Rotorkörper (21) ein Innengewinde (213) umfasst, und
einen Verlängerungsstab (30), der linear und beweglich durch das Durchgangsloch (1115) der oberen Wand (1113) bis in die Innenseite des Statormoduls (10) eingefügt vorliegt, wobei der Verlängerungsstab (30) ein Außengewinde (31) umfasst, das mit dem Innengewinde (213) des Rotorkörpers (21) in Eingriff steht, um den Verlängerungsstab (30) anzutreiben, sich während der Drehung des Rotormoduls (20) linear zu bewegen,
wobei sich das obere Haltelement (1111) und die obere Trommel (1112) von dem oberen Halteelement (1111) erstrecken, **gekennzeichnet dadurch, dass** die untere Trommel (1212) mit dem unteren Halteelement (1211) verbunden ist und gegen die obere Trommel (1112) anstößt.

2. Linearmotor nach Anspruch 1, worin das obere Halteelement (1111) einen ersten Lagerpositionierungsbereich (1117) umfasst, wobei der Rotorkörper (21) einen zweiten Lagerpositionierungsbereich (23) umfasst, wobei der Rotorkörper (21) ferner einen Lagersatz (40, 50) zwischen dem ersten Lagerpositionierungsbereich (1117) und dem zweiten Lagerpositionierungsbereich (23) aufweist.

3. Linearmotor nach Anspruch 1, worin das untere Halteelement (1211) einen dritten Lagerpositionierungsbereich (1213) umfasst, wobei der Rotorkörper (21) einen vierten Lagerpositionierungsbereich (24) umfasst, wobei der Linearmotor (1) ferner einen Lagersatz (40, 50) zwischen dem dritten Lagerpositionierungsbereich (1213) und dem zweiten Lagerpositionierungsbereich (24) aufweist.

4. Linearmotor nach Anspruch 1, worin das obere Halteelement (1111) eine ringförmige Umfangswand (1114) und wenigstens eine Führungsnut (1116) umfasst, die in der ringförmigen Umfangswand (1114) angeordnet ist, wobei der Verlängerungsstab (30) ein Stiftloch (32) sowie einen Positionierungsstift (33) umfasst, der durch das Stiftloch (32) eingefügt vorliegt und mit der Führungsnut (1116) verbunden und darin beweglich ist.

5. Linearmotor nach Anspruch 1, worin der Verlängerungsstab (30) ein erstes Stabelement (34) umfasst, das das Außengewinde (31) trägt und ein erstes Stiftloch (341) umfasst, ein zweites Stabelement (35), das außerhalb des Statormoduls (10) exponiert angeordnet ist, wobei das zweite Stabelement (35) ein zweites Stiftloch (352) umfasst, sowie einen Verbindungsstift (36), der in dem ersten Stiftloch (341) und das zweite Stiftloch (352) eingefügt vorliegt, um das erste Stabelement (34) und das zweite Stabelement (35) miteinander zu verbinden.

6. Linearmotor nach Anspruch 5, worin das zweite Stabelement (35) ein Verbindungsende (351) umfasst, das das zweite Stiftloch (352) trägt, wobei das Verbindungsende (351) eine transversale Breite aufweist, die größer als der Durchmesser des Durchgangsloch (1115) der oberen Wand (1113) ist.

7. Linearmotor nach Anspruch 1, worin der Verlängerungsstab (30) eine Lokalisierungsrille (611) umfasst, die sich um den Umfang erstreckt und außerhalb des Statormoduls (10) angeordnet ist, sowie einen Rückhaltering (62), der in der Lokalisierungsrille (611) angeordnet ist und außerhalb des Statormoduls (10) gestoppt werden kann.

8. Linearmotor nach Anspruch 1, worin die erste Statoreinheit (11) ferner einen äußeren magnetischen Kragen (114), einen inneren magnetischen Kragen (113) und eine Aufnahmekammer (115) umfasst, die zwischen dem äußeren magnetischen Kragen (114) und dem inneren magnetischen Kragen (113) der ersten Statoreinheit (11) ausgebildet vorliegt, um die obere Trommel (1112) und die ersten Windungen (112) aufzunehmen.

9. Linearmotor nach Anspruch 1, worin die zweite Statoreinheit (12) ferner einen äußeren magnetischen Kragen (124), einen inneren magnetischen Kragen (123) und eine Aufnahmekammer (125) umfasst, die zwischen dem äußeren magnetischen Kragen (124) und dem inneren magnetischen Kragen (123) der zweiten Statoreinheit (12) ausgebildet vorliegt, um die untere Trommel (1212) und die zweiten Windungen (122) aufzunehmen.

10. Linearmotor nach Anspruch 1, worin der Rotorkörper (21) einen Magnethalter (211) zum Halten des Magneten (22) drumherum umfasst, sowie eine Nuss (212), die in dem Magnethalter (211) angeordnet ist und das Innengewinde (213) darin definiert.

## Revendications

1. Moteur linéaire (1) comprenant:
un module de stator (10) comprenant une première unité de stator (11) et une seconde unité de stator (12) montée sur ladite première unité de stator (11), ladite première unité de stator (11) comprenant un capuchon d'extrémité supérieur (111) et un premier enroulement (112), ledit capuchon d'extrémité supérieur (111) comprenant un élément de retenue supérieur (1111) et une bobine supérieure (1112), ledit élément de retenue supérieur (2222) comprenant une paroi de sommet (1113), ladite paroi de sommet (1113) comprenant un trou traversant (1115), ledit premier enroulement (112) étant enroulée autour de ladite bobine supérieure (1112), ladite seconde unité de stator (12) comprenant un capuchon d'extrémité inférieur (121) et un second enroulement (122),ledit capuchon d'extrémité inférieur (121) comprenant un élément de retenue inférieur (1211) et une bobine inférieure (1212), ledit second enroulement (122) étant enroulé autour de ladite bobine inférieure (1212),
un module de rotor (20) monté rotativement dans ledit module de stator (10), ledit module de stator (20) comprenant un corps de rotor (21) et au moins un aimant (22) monté autour dudit corps de rotor (21) et faisant face audit premier enroulement (112) et audit second enroulement (122), ledit corps de rotor (21) comprenant un filetage intérieur (213) et une tige d'extension (30) insérée de manière mobile linéairement à travers ledit trou traversant (1115) de ladite paroi de sommet (1113) dans l'intérieur dudit module de stator (10), ladite tige d'extension (30) comprenant un filetage extérieur (31) fileté dans ledit filetage intérieur (213) dudit corps de rotor (21) pour entraîner ladite tige d'extension (30) à se déplacer linéairement pendant la rotation dudit module de rotor (20),
ledit élément de retenue supérieur (1111) et ladite bobine supérieure (1112) sont en un seul tenant et ladite bobine supérieure (1112) s'étend à partir dudit élément de retenue supérieur (1111), **caractérisé en ce que** ladite bobine inférieure (1212) étant connectée au dit élément de retenue inférieur (1211) et butant contre ladite bobine supérieure (1112).

2. Moteur linéaire selon la revendication 1, dans lequel ledit élément de retenue supérieur (1111) comprend une première portion de positionnement de palier (1117), ledit corps de rotor (21) comprend une seconde portion de positionnement de palier (23), le moteur linéaire (1) comprend en outre un ensemble de palier (40, 50) entre ladite troisième portion de positionnement de palier (1117) et ladite quatrième portion de positionnement de palier (23).

3. Moteur linéaire selon la revendication 1, dans lequel ledit élément de retenue inférieur (1211) comprend une troisième portion de positionnement de palier (1213), ledit corps de rotor (21) comprend une quatrième portion de positionnement de palier (24), le moteur linéaire (1) comprend en outre un ensemble de palier (40, 50) entre ladite troisième portion de positionnement de palier (1213) et ladite quatrième portion de positionnement de palier (24).

4. Moteur linéaire selon la revendication 1, dans lequel ledit élément de retenue supérieur (1111) comprend une paroi périphérique annulaire (1114) et au moins une rainure de guidage (1116) disposée dans ladite paroi périphérique annulaire (1114), ladite tige d'extension (30) comprend un trou de goupille (32) et une goupille de positionnement inséré (33) à travers ledit trou de goupille (32) et couplée à et déplaçable le long de ladite rainure de guidage (1116).

5. Moteur linéaire selon la revendication 1, dans lequel ladite tige d'extension (30) comprend un premier composant de tige (34) inséré dans ledit module de stator (10), ledit premier composant de tige (34) pourtant ledit filetage extérieur (31) et comprenant un premier trou de goupille (341), un second composant de tige (35) exposé à l'extérieur dudit module de stator (10), ledit second composant de tige (35) comprenant un second tour de goupille (352) et une goupille de raccordement (36) insérée dans ledit premier trou de goupille (341) et ledit second de goupille (352) pour joindre le dit premier composant de tige (34) et ledit second composant de tige (35).

6. Moteur linéaire selon la revendication 5, dans lequel ledit second composant de tige (35) comprend une extrémité de raccordement (351) portant ledit second trou de goupille (352), ladite extrémité de raccordement (351) ayant une largeur transversale plus grande que le diamètre du trou traversant (1115) de ladite paroi de sommet (1113).

7. Moteur linéaire selon la revendication 1, dans lequel ladite tige extension 30 comprend une rainure de positionnement (611) s'étendant autour de la périphérie de cette dernière et disposée à l'extérieur dudit module de stator (10) et une bague de retenue (62) montée dans ladite rainure de positionnement (611) et arrêtable à l'extérieur dudit module de stator (10).

8. Moteur linéaire selon la revendication 1, dans lequel ladite première unité de stator (11) comprend en outre une culasse magnétique extérieure (114), une culasse magnétique intérieure (113) et une chambre de logement (115) définie entre la culasse magnétique extérieure (14) et la culasse magnétique intérieure (113) de ladite première unité de stator (11) pour renfermer ladite bobine supérieure (1112) et ledit premier enroulement (112).

9. Moteur linéaire selon la revendication 1, dans lequel ladite seconde unité de stator (12) comprend en outre une culasse magnétique extérieure (124), une classe magnétique intérieure (123) et une chambre de logement (125) définie entre la culasse magnétique extérieure (124) et la culasse magnétique intérieure (123) de ladite seconde unité de stator (12) pour renfermer ladite bobine inférieure (1212) et ledit second enroulement (122).

10. Moteur linéaire selon la revendication 1, dans lequel ledit corps de rotor (21) comprend un support d'aimant (211) supportant ledit aimant (22) autour de celui-ci et un écrou (212) montés dans ledit support d'aimant (211) et définissant ledit filetage intérieur (213) à l'intérieur de celui-ci.
